# EUROPÄISCHE PATENTSCHRIFT

(11) **EP 0 594 955 B1**
(45) Veröffentlichungstag und Bekanntmachung des Hinweises auf die Patenterteilung: **10.04.1996**
(21) Anmeldenummer: 93112245.1
(22) Anmeldetag: 30.07.1993
(51) Int. Cl.: B60R 13/04

(54) **Seitenverkleidung für Kraftfahrzeuge**
Side panel for motor vehicles
Panneau latéral pour véhicules automobiles

(30) Priorität: 25.09.1992 DE 4232192
(43) Veröffentlichungstag der Anmeldung: 04.05.1994
(73) Patentinhaber: Dr.Ing.h.c. F. Porsche Aktiengesellschaft, D-70435 Stuttgart (DE)
(72) Erfinder: Vogelgesang, Harald-Werner, D-75449 Wurmberg (DE)

(56) Entgegenhaltungen:
- GB-A- 2 136 863

## Beschreibung

Die Erfindung bezieht sich auf eine Seitenverkleidung für Kraftfahrzeuge, insbesondere Personenkraftwagen, gemäß dem Oberbegriff des Patentanspruches 1.

Eine bekannte, aus Kunststoff gefertigte Seitenverkleidung (DE 37 21 783 A1) für ein Kraftfahrzeug ist an ihrem unteren Endbereich über Befestigungsschrauben mit dem Aufbau verbunden.
Zur Festlegung eines oberen Bereiches der Seitenverkleidung ist eine Einspannvorrichtung vorgesehen, die sich aus einem aufbauseitig befestigten Steckteil, einen an der Seitenverkleidung in Lage gehaltenen Aufnahmeteil und Blattfedern zusammensetzt. Dieses Aufnahmeteil und die Blattfedern sind mittels Schrauben an der Seitenverkleidung befestigt, wobei zur Abdeckung der Schraube eine zusätzliche Zierleiste in die Seitenverkleidung eingesetzt ist.
Dieser Anordnung haftet der Nachteil an, daß die Befestigung der Seitenverkleidung zeit- und kostenaufwendig ist, da eine Vielzahl von Montagevorgängen und Bauteilen zur Festlegung der Seitenverkleidung erforderlich sind.
Aufgabe der Erfindung ist es, den seitlichen Längsträger (Schweller) und eine diesen zumindest teilweise abdeckende Seitenverkleidung so auszubilden, daß bei funktionsgerechter Halterung eine einfache, schnelle und kostengünstige Befestigung bzw. Montage der Seitenverkleidung am Längsträger erzielt wird.
Erfindungsgemäß wird diese Aufgabe durch die kennzeichnenden Merkmale des Anspruches 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die örtlich an der Seitenverkleidung angespritzten, in Aufnahmeöffnungen der seitlichen Längsträger eingesetzten Rastnasen eine einfache, schnelle und kostengünstige Montage bzw. Befestigung der Seitenverkleidung am Längsträger erzielt wird, da außer den Befestigungsschrauben für den unteren Endbereich der Seitenverkleidung keine weiteren Vormontageteile benötigt werden.

Ferner werden die Aufnahmeöffnungen in den seitlichen Längsträgern als Lackablauföffnungen bei der Lackierung (Tauchbad) des Fahrzeuges verwendet, so daß sie eine Doppelfunktion ausüben und so auf weitere Öffnungen im Aufbau verzichtet werden kann. Eine Positionierung der Seitenverkleidung in Längsrichtung wird dadurch erreicht, daß eine etwa in der Mitte der Längserstreckung der Seitenverkleidung angeordnete Rastnase relativ paßgenau in eine korrespondierende Aufnahmeöffnung der seitlichen Längsträger einsetzbar ist, wogegen Wärmeausdehnungen der Seitenverkleidung durch entsprechende Breite der übrigen Aufnahmeöffnungen in einfacher Weise aufgenommen werden können. Ein Ausführungsbeispiel der Erfindung ist in der Zeichnung dargestellt und wird im Folgenden näher erläutert.

Es zeigt:
- Fig. 1: eine Teilseitenansicht eines Personenkraftwagens mit einer aufgesetzten Seitenverkleidung
- Fig. 2: einen Schnitt nach der Linie II-II den Fig. 1 in größerem Maßstab, wobei die Seitenverkleidung in der Einführstellung dargestellt ist.
- Fig. 3: einen Schnitt entsprechend Fig. 2 mit der Seitenverkleidung in montierter Betriebsstellung
- Fig. 4: einen Schnitt nach der Linie IV-IV der Fig. 1, in dem die untere Befestigung der Seitenverkleidung dargestellt ist.
- Fig. 5: eine Einzelheit X der Fig. 3 in größerem Maßstab

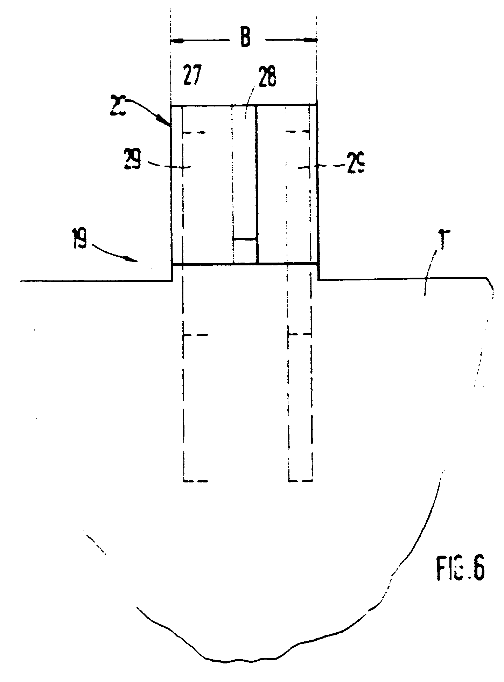

- Fig. 6: eine Ansicht in Pfeilrichtung R der Fig. 5 in größerem Maßstab

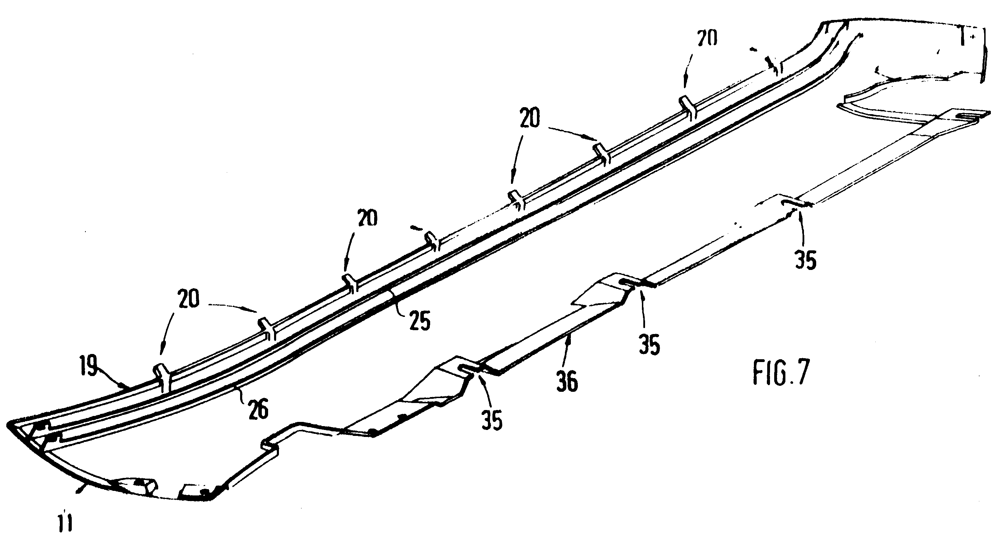

- Fig. 7: eine perspektivische Ansicht von oben auf die in Fahrtrichtung gesehen rechte Seitenverkleidung des Personenkraftwagens.

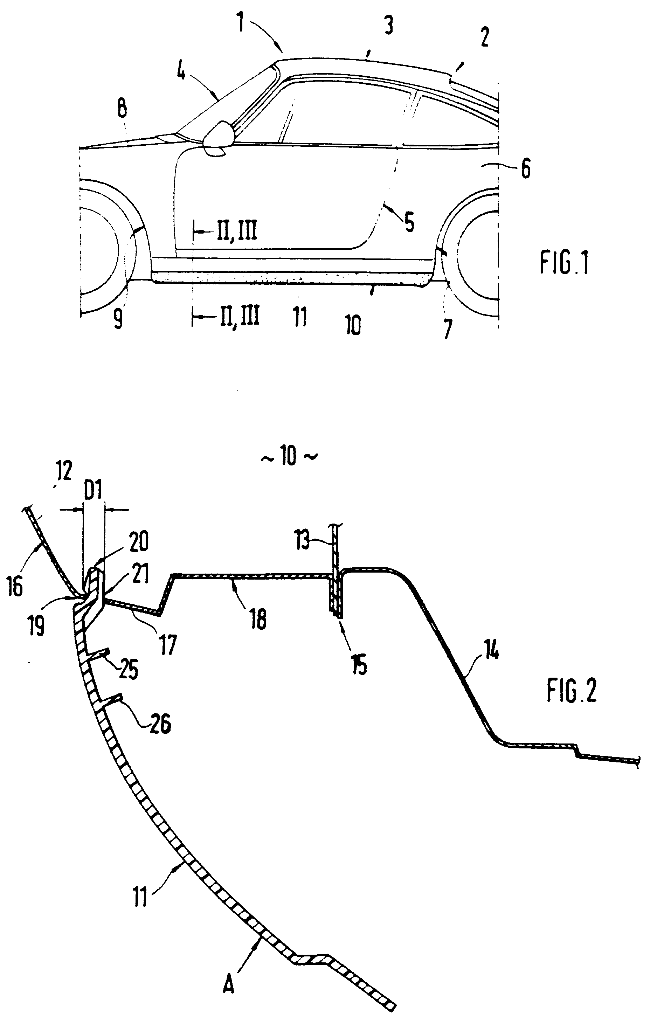

Der in Fig. 1 dargestellte Personenkraftwagen 1 weist einen Aufbau 2 auf, der in gezeigtem Bereich ein Dach 3, eine Windschutzscheibe 4, eine Tür 5, ein hinteres Seitenteil 6 mit einem Radhaus 7 und ein vorderes Seitenteil 8 mit einem Radhaus 9 umfaßt. Unterhalb der Tür 5 verläuft ein vom vorderen Radhaus 9 bis zum hinteren Radhaus 7 sich erstreckender seitlicher Längsträger 10 (Schweller), der - in Höhenrichtung gesehen - zumindest abschnittsweise von einer Seitenverkleidung 11 abgedeckt ist.
Der seitliche Längsträger 10 setzt sich gemäß den Fig. 2 bis 4 aus einem äußeren Teil 12, einem Stegblech 13 und einem inneren Teil 14 zusammen. Die Teile 12, 14 und das Stegblech 13 sind bei 15 an gleichgerichteten Flanschen durch Schweißen oder dgl. miteinander verbunden und bilden einen in Längsrichtung verlaufenden Hohlträger. Das äußere Teil 12 umfaßt einen die Außenhaut bildenden Abschnitt 16, der einen gebogenen Formverlauf aufweist und in Höhenrichtung gesehen nach unten hin eingezogen ist. An den Abschnitt 16 schließt sich ein annähernd horizontal ausgerichteter oder leicht schräg verlaufender Wandabschnitt 17 an, der in eine stufenförmige Einprägung 18 übergeht.
Die Befestigung der vorzugsweise aus Kunststoff gefertigten Seitenverkleidung 11 erfolgt in der Weise, daß an einem obenliegenden Endbereich 19 der Seitenverkleidung 11 örtlich angeformte Rastnasen 20 vorgesehen sind, die in Aufnahmeöffnungen 21 der seitlichen Längsträger 10 eingesetzt sind. Die etwa rechteckförmig ausgebildeten Aufnahmeöffnungen 21 sind an dem Wandabschnitt 17 des äußeren Teiles 12 der seitlichen Längsträger 10 vorgesehen.
Die Seitenverkleidung 11 ist in einer Einführstellung A in die Aufnahmeöffnungen 21 einschiebbar, wobei die Rastnase 20 etwa senkrecht zum Wandabschnitt 17 ausgerichtet sind (Fig.2). Die Quererstreckung D der Aufnahmeöffnung 21 ist dabei so bemessen, daß sie etwas größer ist als die Dicke D1 der Rastnasen 20.
Durch Verschwenken der Seitenverkleidung 11 von der Einführstellung A in die Betriebsstellung C nehmen die Rastnasen 20 eine schrägverlaufende Position ein, dergestalt, daß die Rastnasen 20 die Aufnahmeöffnungen 21 hintergreifen und sich an der Innenseite der seitlichen Längsträger 10 abstützen. Die Aufnahmeöffnungen 21 dienen gleichzeitig als Lackablauföffnungen beim Tauchbad der Rohkarosserie.
Im Ausführungsbeispiel sind die Rastnasen 20 an einen obenliegenden Endbereich 19 der Seitenverkleidung 11 vorgesehen, wobei sie die Seitenverkleidung 11 nach oben hin überragen.
Die Rastnasen 20 sind einstückig mit der Seitenverkleidung 11 ausgebildet und sind an die Seitenverkleidung 11 angespritzt. Es besteht aber auch die Möglichkeit, daß die Rastnasen 20 in einen mittleren oder einen untenliegenden Bereich 22 der Höhenerstreckung der Seitenverkleidung 11 angeordnet sind. Die Rastnasen 20 sind in Abständen von etwa 100 - 200 mm an der Seitenverkleidung 11 vorgesehen und erstrecken sich gleichmäßig verteilt über die gesamte Längserstreckung der Seitenverkleidung 11. Benachbart den Rastnasen 20 liegt die Seitenverkleidung 11 mit einem aufrechten Steg 23 am darüberliegenden Wandabschnitt 17 des Längsträgers 10 an.
Die Seitenverkleidung 11 weist im Bereich des Stegs 23 eine Querschnittserweiterung 24 auf. Ferner sind an der Seitenverkleidung 11 innenliegende Versteifungsrippen 25, 26 vorgesehen, die sich durchgehend über die Längserstreckung der Seitenverkleidung 11 erstrecken.

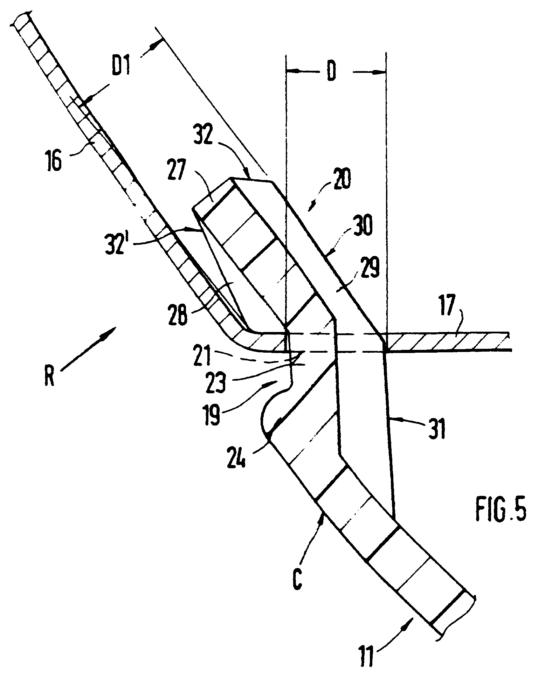

Jede Rastnase 20 ist an den endseitig angeordneten aufrechten Steg 23 der Seitenverkleidung 11 angeschlossen und verläuft winkelig zu diesem Steg 23. Gemäß Fig. 5 umfaßt jede Rastnase 20 einen sich über die Breite B der Rastnase 20 erstreckenden durchgehenden Flansch 27, an dem beiderseits zumindest je eine vorstehende Rippe 28, 29 vorgesehen ist. Der Flansch 27 ist in der Betriebsstellung C etwa parallel zum Wandabschnitt 16 des Längsträgers 10 ausgerichtet.

Entsprechend Fig. 5 ist an der dem Wandabschnitt 16 zugekehrten Seite eine mittige Rippe 28 vorgesehen, wogegen auf der gegenüberliegenden Seite des Flansches 27 zwei seitlich außenliegende Rippen 29 angeformt sind. Diese beiden Rippen 29 erstrecken sich bis zur Innenseite der Seitenverkleidung 11, wobei sie in einem ersten Bereich 30 etwa paralles zum Flansch 27 und in einem zweiten Bereich 31 etwa parallel zum Steg 23 verlaufen. Die Rippen 28, 29 sind zum leichteren Einführen der Rastnasen 20 mit einer oberen Einführschräge 32, 32' versehen. Gemäß Fig. 1 erstreckt sich die Seitenverkleidung 11 durchgehend zwischen den beiden Radhäusern 7, 9 des Personenkraftwagens.

Zur eindeutigen Positionierung der Seitenverkleidung 11 ist vorgesehen, daß eine Aufnahmeöffnung 21 für eine etwa in der Mitte der Längserstreckung der Seitenverkleidung 11 angeordneten Rastnase 20 nur geringfügig breiter ist als die Breite B der Rastnase 20 (pro Seite 0,5 - 1,5 mm) wogegen die anderen Aufnahmeöffnungen 21 für die korrespondierenden Rastnasen 20 zum Toleranzausgleich beiderseits der Rastnase 20 jeweils 2-4 mm größer ausgebildet sind.

Der untere Randbereich 22 der Seitenverkleidung 11 ist durch Schrauben, Nieten, Klipsen oder dgl. mit dem Aufbau 2 verbunden.

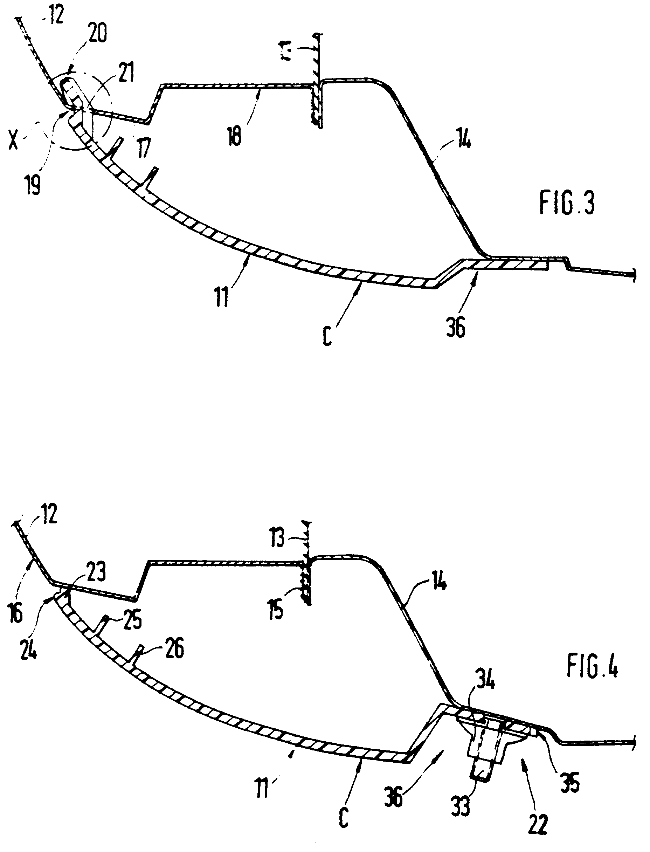

In Fig. 4 sind zur Befestigung des unteren Randbereiches 22 der Seitenverkleidung 11 am inneren Teil 14 des Längsträgers 10 nach unten gerichtete Schweißbolzen 33 mit einem Außengewinde angebracht, auf die Muttern oder Druckknöpfe 34 aufsetzbar sind. Ein Endbereich der Seitenverkleidung 11 ist zwischen der Unterseite des Teiles 14 und einen oberen Bereich der Mutter oder des Druckknopfes 34 eingespannt. Zur leichteren Montage der Seitenverkleidung 11 weist diese im unteren Befestigungsbereich nach innen hin offene Schlitzöffnungen 35 auf.
Die Seitenverkleidung 11 weist im Querschnitt gesehen einen gebogenen Formverlauf auf, der in Fortsetzung der Kontur des Längsträgers 10 verläuft. Im unteren Randbereich weist die Seitenverkleidung einen stufenförmigen, nach oben gerichteten Absatz 36 auf, der im Bereich der Befestigungsstellen weiter nach oben gezogen ist.

Im Bereich der Radhäuser 7, 9 ist die Seitenverkleidung 11 über je eine nicht näher dargestellte Clipsverbindung mit dem jeweiligen Radhaus 7, 9 verbunden. Ein auf den Versteifungsrippen 25, 26 aufgesteckter Clip ist dabei schwimmend gelagert.

## Patentansprüche

1. Seitenverkleidung für Kraftfahrzeuge, insbesondere Personenkraftwagen, die zumindest einen Teilbereich der seitlichen Längsträger (Schweller) des Aufbaus abdeckt, wobei - in Höhenrichtung gesehen - ein Endbereich der Seitenverkleidung durch separate Befestigungsorgane in Lage gehalten ist, **dadurch gekennzeichnet**, daß an der Seitenverkleidung (11) örtlich Rastnasen (20) angeformt sind, die mit Aufnahmeöffnungen (21) der seitlichen Längsträger (10) zusammenwirken, dergestalt, daß in einer Einführstellung A der Seitenverkleidung (11) die Rastnasen (20) in die Aufnahmeöffnungen (21) einschiebbar sind, und daß durch Verschwenken der Seitenverkleidung (11) in die Betriebsstellung C die Rastnasen (20) die Aufnahmeöffnungen (21) hintergreifen und sich am seitlichen Längsträger (10) abstützen.

2. Seitenverkleidung nach Anspruch 1, **dadurch gekennzeichnet**, daß die Aufnahmeöffnungen (21) an den seitlichen Längsträgern (10) beim Tauchbad des Personenkraftwagens als Lackablauföffnungen dienen.

3. Seitenverkleidung nach Anspruch 1, **dadurch gekennzeichnet**, daß die Rastnasen (20) an einem obenliegenden Endbereich (19) der Seitenverkleidung (11) vorgesehen sind und die Seitenverkleidung (11) nach oben hin überragen.

4. Seitenverkleidung nach den Ansprüchen 1 und 3, **dadurch gekennzeichnet**, daß die Rastnasen (20) an der aus Kunststoff gefertigten Seitenverkleidung (11) angespritzt sind.

5. Seitenverkleidung nach den Ansprüchen 1, 3 und 4, **dadurch gekennzeichnet**, daß sich die Rastnasen (20) an einen endseitigen aufrechten Steg (23) der Seitenverkleidung (11) anschließen und winkelig zu diesem Steg (23) ausgerichtet sind.

6. Seitenverkleidung nach einem oder mehreren der vorangegangenen Ansprüche, **dadurch gekennzeichnet**, daß jede Rastnase (20) einen sich über die Breite B der Rastnase (20) erstreckenden durchgehenden Flansch (27) umfaßt, an dem beiderseits zumindest je eine vorstehende Rippe (28, 29) vorgesehen ist.

7. Seitenverkleidung nach einem oder mehreren der vorangegangenen Ansprüche, **dadurch gekennzeichnet**, daß die Seitenverkleidung (11) mit dem endseitigen aufrechten Steg (23) an der Unterseite eines annähernd horizontalen oder schräg verlaufenden Wandabschnittes (17) des Längsträgers (10) anliegt und daß an diesem Wandabschnitt (17) die Aufnahmeöffnungen (21) vorgesehen sind.

8. Seitenverkleidung nach einem oder mehreren der vorangegangenen Ansprüchen, **dadurch gekennzeichnet**, daß die Aufnahmeöffnungen (21) rechteckförmig ausgebildet sind.

9. Seitenverkleidung nach einem oder mehreren der vorangegangenen Ansprüche, **dadurch gekennzeichnet**, daß eine Aufnahmeöffnung (21) für eine etwa in der Mitte der Längserstreckung der Seitenverkleidung (11) angeordnete Rastnase (20) nur geringfügig breiter ist als die Breite B der Rastnase (20), wogegen die anderen Aufnahmeöffnungen (21) beiderseits der jeweiligen Rastnase (20) einen größeren Toleranzausgleichsbereich aufweisen.

## Claims

1. A side panel for motor vehicles, in particular passenger cars, covering at least a partial area of the lateral longitudinal supports (sills) of the body, wherein an end area of the side panel - as viewed in the vertical direction - is held in position by separate fastening members, **characterized in that** catch projections (20) are integrally moulded on the side panel (11) locally, the catch projections (20) cooperating with receiving openings (21) in the lateral longitudinal supports (10) in such a way that in an insertion position **A** of the side panel (11) the catch projections (20) are insertable into the receiving openings (21), and by pivoting the side panel (11) into the operating position **C** the catch projections (20) engage behind the receiving openings (21) and are supported on the lateral longitudinal support (10).

2. A side panel according to Claim 1, **characterized in that** the receiving openings (21) on the lateral longitudinal supports (10) act as lacquer-outlet openings during the dipping of the passenger car.

3. A side panel according to Claim 1, **characterized in that** the catch projections (20) are provided on an upper end area (19) of the side panel (11) and project upwards beyond the side panel (11).

4. A side panel according to Claims 1 and 3, **characterized in that** the catch projections (20) are injection-moulded onto the side panel (11) produced from plastics material.

5. A side panel according to Claims 1, 3 and 4, **characterized in that** the catch projections (20) adjoin a vertical web (23) at the end of the side panel (11) and are orientated at an angle to the said web (23).

6. A side panel according to one or more of the preceding Claims, **characterized in that** each catch projection (20) comprises a continuous flange (27) which extends over the width **B** of the catch projection (20) and on which at least one projecting rib (28, 29) is provided respectively on both sides.

7. A side panel according to one or more of the preceding Claims, **characterized in that** the side panel (11) rests with the vertical web (23) at the end against the underside of a substantially horizontal or obliquely extending wall portion (17) of the longitudinal support (10), and the receiving openings (21) are provided on the said wall portion (17).

8. A side panel according to one or more of the preceding Claims, **characterized in that** the receiving openings (21) are rectangular.

9. A side panel according to one or more of the preceding Claims, **characterized in that** one receiving opening (21) for a catch projection (20) arranged substantially in the middle of the longitudinal extension of the side panel (11) is only slightly wider than the width **B** of the catch projection (20), whereas the other receiving openings (21) on both sides of the respective catch projection (20) have a larger tolerance-compensation area.

## Revendications

1. Panneau latéral pour véhicules automobiles, en particulier voitures particulières, recouvrant au moins une zone partielle des supports longitudinaux latéraux (bas de marche) de la carrosserie, une zone d'extrémité - lorsqu'on observe dans la direction de la hauteur - du panneau latéral étant maintenue en position au moyen d'organes de fixation séparés, caractérisé en ce que sont formés d'un seul tenant localement sur le panneau latéral (11) des ergots d'encliquetage (20) qui coopèrent avec des ouvertures de logement (21) des supports longitudinaux (10) latéraux, de manière que les ergots d'encliquetage (20) puissent être introduits dans les ouvertures de logement (21), dans une position d'introduction (A) du panneau latéral (11) et que, par pivotement du panneau latéral (11) en position de fonctionnement (C), les ergots d'encliquetage (20) saisissent par l'arrière les ouvertures de logement (21) et prennent appui sur le support longitudinal (10) latéral.

2. Panneau latéral selon la revendication 1, caractérisé en ce que les ouvertures de logement (21) ménagées sur les supports longitudinaux (10) latéraux servent d'ouverture d'évacuation des fuites lors de l'immersion dans un bain de la voiture particulière.

3. Panneau latéral selon la revendication 1, caractérisé en ce que les ergots d'encliquetage (20) sont prévus sur une zone d'extrémité (19) supérieure du panneau latéral (11) et pénètrent vers le haut dans le panneau latéral (11).

4. Panneau latéral selon les revendications 1 et 3, caractérisé en ce que les ergots d'encliquetage (20) sont réalisés d'un seul tenant par surinjection sur le panneau latéral (11) fabriqué en matière plastique.

5. Panneau latéral selon les revendications 1, 3 et 4, caractérisé en ce que les ergots d'encliquetage (20) se raccordent à une nervure (23) montante à une extrémité du panneau latéral (11) et sont orientés en faisant un angle par rapport à cette nervure (23).

6. Panneau latéral selon l'une ou plusieurs des revendications précédentes, caractérisé en ce que chaque ergot d'encliquetage (20) comprend un rebord (27) ininterrompu s'étendant sur la largeur (B) de l'ergot d'encliquetage (20) et sur lequel de part et d'autre est prévue au moins une nervure (28, 29) en saillie.

7. Panneau latéral selon l'une ou plusieurs des revendications précédentes, caractérisé en ce que le panneau latéral (11) appuie par la nervure montante (23) d'extrémité sur la face inférieure d'une section de paroi (17), s'étendant à peu près horizontalement ou obliquement, du support longitudinal (10) et que les ouvertures de logement (21) sont prévues sur cette section de paroi (17).

8. Panneau latéral selon l'une ou plusieurs des revendications précédentes, caractérisé en ce que les ouvertures de logement (21) sont de forme rectangulaire.

9. Panneau latéral selon l'une ou plusieurs des revendications précédentes, caractérisé en ce qu'une ouverture de logement (21) destinée à un ergot d'encliquetage (20) disposé à peu près au centre de la longueur du panneau latéral (11) n'est que légèrement plus large que la largeur (B) de l'ergot d'encliquetage (20), alors que, par contre, les autres ouvertures latérales (21) présentent de part et d'autre de l'ergot d'encliquetage (20) respectif une plage de compensation de tolérance plus grande.
